# FASCICULE DE BREVET EUROPEEN

(11) **EP 3 694 822 B1**
(45) Date de publication et mention de la délivrance du brevet: **19.07.2023**
(21) Numéro de dépôt: 18782455.2
(22) Date de dépôt: 09.10.2018
(51) Int. Cl.: C04B 35/48, C04B 35/484, C04B 35/488, C04B 35/626, C04B 35/653, C04B 35/657, C03B 5/00, C03B 5/43, C04B 35/66, C04B 35/76

(54) **PROCEDE DE FABRICATION D'UN BLOC FONDU A HAUTE TENEUR EN ZIRCONE**
VERFAHREN ZUR HERSTELLUNG EINES GESCHMOLZENEN BLOCKS MIT HOHEM ZIRKONOXIDGEHALT
METHOD FOR PRODUCING A MOLTEN BLOCK WITH A HIGH ZIRCONIA CONTENT

(30) Priorité: 11.10.2017 FR 1759529
(43) Date de publication de la demande: 19.08.2020
(73) Titulaire: SAINT-GOBAIN CENTRE DE RECHERCHES ET D'ETUDES EUROPEEN, 92400 Courbevoie (FR)
(72) Inventeur: CABODI, Isabelle, 84300 Cavaillon (FR); VESPA, Pierrick, 13100 Aix-En-Provence (FR); BATTU, Laurent, 84700 Sorgues (FR); CITTI, Olivier, 84300 Cavaillon (FR)
(74) Mandataire: Cabinet Nony
(86) Numéro de dépôt international: PCT/EP2018/077399
(87) Numéro de publication internationale: WO 2019/072799

(56) Documents cités:
- EP-A1- 0 403 387
- EP-A1- 2 418 189
- WO-A1-03/074445
- WO-A1-2009/153517
- WO-A1-2016/056146
- WO-A1-2016/131948
- CN-A- 1 059 704
- FR-A- 1 208 577
- FR-A1- 2 920 152
- FR-A1- 2 925 485
- FR-A1- 2 953 825
- US-A1- 2009 176 642

## Description

### Domaine technique

L'invention concerne un procédé de fabrication d'un bloc réfractaire fondu à haute teneur en zircone.

### Etat de la technique

Parmi les blocs réfractaires, on distingue les blocs fondus, bien connus pour la construction des fours de fusion du verre, et les blocs frittés.

A la différence des blocs frittés, les blocs fondus comportent le plus souvent une phase vitreuse intergranulaire reliant des grains cristallisés. Les problèmes posés par les blocs frittés et par les blocs fondus, et les solutions techniques adoptées pour les résoudre, sont donc généralement différents. Une composition mise au point pour fabriquer un bloc fritté n'est donc pas a *priori* utilisable telle quelle pour fabriquer un bloc fondu, et réciproquement.

Les blocs fondus, souvent appelés « électrofondus », sont obtenus par fusion d'un mélange de matières premières appropriées dans un four à arc électrique ou par toute autre technique adaptée. La matière en fusion est ensuite classiquement coulée dans un moule, puis solidifiée. Généralement, le produit obtenu subit alors un cycle de refroidissement contrôlé pour être amené à température ambiante sans fracturation. Cette opération est appelée « recuisson » par l'homme de l'art.

Parmi les blocs fondus, les blocs fondus à très haute teneur en zircone (THTZ), comportant généralement plus de 80%, voire plus de 85 % en masse de zircone, sont réputés pour leur qualité de très grande résistance à la corrosion et leur capacité à ne pas colorer le verre produit et à ne pas générer de défauts dans ce dernier.

FR1 191665 décrit un procédé utilisant du zircon pour la fabrication de produits réfractaires contenant de la zircone, de l'alumine et de la silice. Ce procédé en condition très réductrices conduit à des produits présentant un taux important de carbone résiduel. Il en résulte des risques d'exsudation et/ou de bullage générant des défauts dans le verre. Par ailleurs, la quasi-totalité des phases étant cristallisée, ces produits ne permettent pas une bonne accommodation aux variations thermiques, en particulier pour des blocs de grandes dimensions. Les produits présentent également une porosité incompatible avec une utilisation sous forme de blocs de grandes dimensions. Ces produits ne sont donc utilisés que comme source de matières premières (sous forme particulaire) pour la fabrication d'autres produits réfractaires.

EP0403387A1 décrit des produits fondus et coulés à haute teneur en zircone qui contiennent, en pourcentages massiques, 4 à 5 % de silice SiO₂, environ 1 % d'alumine Al₂O₃, 0,3 % d'oxyde de sodium et moins de 0,05 % de P₂O₅.

FR2701022 décrit des produits fondus et coulés à haute teneur en zircone qui contiennent, en pourcentages massiques, 0,05 à 1,0 % de P₂O₅ et 0,05 à 1,0 % d'oxyde de bore B₂O₃.

FR2723583 décrit des produits fondus et coulés à haute teneur en zircone qui contiennent, en pourcentages massiques, 3 à 8 % de silice SiO₂, 0,1 à 2,0 % d'alumine Al₂O₃, 0,05 à 3,0 % d'oxyde de bore B₂O₃, 0,05 à 3 % de BaO + SrO + MgO, 0,05 à 0,6 % de Na₂O + K₂O et moins de 0,3 % de Fe₂O₃ + TiO₂.

Les blocs fondus à très haute teneur en zircone, tels que l'ER 1195 produit et commercialisé par la société SEFPRO, sont classiquement élaborés en conditions oxydantes. Ils sont aujourd'hui largement utilisés dans les fours de verrerie. Cependant, leur coût élevé peut limiter leur usage, notamment pour les superstructures des fours de verrerie.

Il existe donc un besoin pour un procédé de fabrication d'un bloc fondu à très haute teneur en zircone qui soit moins coûteux que les procédés actuels.

La présente invention vise à satisfaire ce besoin.

### Résumé de l'invention

L'invention concerne un procédé de fabrication d'un bloc réfractaire comportant plus de 80%, de préférence plus de 85% de zircone, en pourcentage massique sur la base des oxydes, ledit procédé comprenant les étapes successives suivantes :
a) fusion, en conditions réductrices, d'une charge comportant plus de 50% de zircon, en pourcentage massique, de manière à réduire le zircon et obtenir une matière en fusion,
b) application de conditions oxydantes à la matière en fusion,
c) coulage de ladite matière en fusion,
d) refroidissement jusqu'à solidification au moins partielle de la matière en fusion sous la forme d'un bloc,
e) optionnellement, traitement thermique dudit bloc, en particulier traitement thermique de recuisson.

Comme on le verra plus en détail dans la suite de la description, un procédé selon l'invention permet avantageusement, par fusion d'une charge contenant l'ensemble des oxydes du bloc à fabriquer, d'obtenir rapidement et à un coût réduit un bloc réfractaire utilisable dans un four de verrerie. En particulier, le zircon est introduit directement dans la charge, avec les autres matières premières, sans traitement intermédiaire.

Un procédé selon l'invention peut encore comporter une ou plusieurs des caractéristiques optionnelles suivantes :
- l'étape a) est poursuivie jusqu'à ce que la teneur en silice dans la matière en fusion soit inférieure à 15% ;
- l'étape b) est poursuivie jusqu'à ce que la teneur en carbone dans la matière en fusion soit inférieure à 500 ppm ;
- à l'étape a), la charge comporte plus de 70%, de préférence plus de 80% de zircon, en pourcentage massique sur la base de la charge ;
- à l'étape a), la charge présente une composition, en pourcentage massique sur la base de la charge, telle que la quantité d'agent réducteur, de préférence de carbone, est supérieure à 2,0%, de préférence supérieure à 4,0% et/ou inférieure à 10,0%, de préférence inférieure à 8,0% ;
- la charge comporte une quantité d'alumine supérieure à 0,2% et inférieure à 3,0%, de préférence supérieure à 0,5% et/ou inférieure à 2,5%, de préférence inférieure à 1,5%, en pourcentage massique sur la base de la charge ;
- la charge comporte une quantité d'une source de sodium, de préférence de carbonate de sodium, supérieure à 0,5% et/ou inférieure à 5,0%, de préférence supérieure à 1,0% et inférieure à 4,5%, en pourcentage massique sur la base de la charge ;
- la charge comporte une quantité totale de stabilisant de la zircone supérieure à 1,0%, de préférence supérieure à 4,0%, et/ou inférieure à 10,0%, en pourcentage massique sur la base de la charge.

Il est également décrit un bloc obtenu ou susceptible d'avoir été obtenu par un procédé selon l'invention.

Un tel bloc présente de préférence une composition chimique telle que, pour un total de 100% :
- ZrO₂ : plus de 82,0% et moins de 97,0%,
- SiO₂ : plus de 0,5% et moins de 15,0%,
- Al₂O₃: plus de 0,2%,
- Na₂O : plus de 0,1%,
- espèces oxydes autres que ZrO₂, SiO₂, Al₂O₃, et Na₂O : moins de 10,0%,
et, de préférence encore, une composition chimique telle que, pour un total de 100% :
- ZrO₂ : plus de 86,0%,
- SiO₂ : plus de 2,5%,
- Al₂O₃ : 1,0 - 3,0%,
- Na₂O : moins de 0,5%,
- espèces oxydes autres que ZrO₂, SiO₂, Al₂O₃, et Na₂O : moins de 5,0%.

De préférence, à température ambiante et en pourcentages massiques, plus de 80 % de la zircone du bloc est monoclinique ou plus de 25% de la zircone est quadratique.

De préférence encore, un tel bloc présente une masse de plus de 10 kg.

Il est également décrit un four de fusion de verre comportant un un tel bloc, en particulier dans les régions portées à des températures supérieures à 1000°C, et notamment dans les régions destinées à être en contact avec le verre en fusion ou en contact avec l'atmosphère du four de fusion, en particulier en superstructures. En particulier, il est décrit un four de fusion de verre comportant une superstructure comprenant ou constituée par de tels blocs.

### Définitions

Un bloc est classiquement dit « fondu » lorsqu'il est obtenu par un procédé mettant en oeuvre une fusion d'une charge jusqu'à obtention d'une matière en fusion, puis une solidification de cette matière par refroidissement.

La « charge » est constituée de l'ensemble des matières premières qui ont été introduites dans le four.

Une « matière en fusion » est une masse liquide qui, pour conserver sa forme, doit être contenue dans un récipient. Elle peut contenir quelques particules solides, mais en quantité insuffisante pour qu'elles puissent structurer ladite masse.

Un bloc est un objet dont toutes les dimensions sont supérieures à 10 mm, de préférence supérieures à 50 mm, de préférence supérieures à 100 mm, et qui, à la différence d'une couche, est obtenu par un procédé comportant des opérations de moulage et de démoulage. Un bloc peut par exemple avoir une forme générale parallélépipédique ou bien une forme de type « cruciforme », décrite par exemple dans FR2142624 ou EP354 844.

Sauf mention contraire, toutes les teneurs relatives à la charge sont des pourcentages massiques sur la base de la charge.

Une particule est un objet dont toutes les dimensions sont inférieures ou égale à 10 mm, de préférence inférieures à 5 mm, de préférence inférieures à 2 mm.

Une particule « en » un constituant, ou « d'un » constituant, par exemple une particule « d'alumine » ou « en alumine », est une particule comportant plus de 80%, de préférence plus de 90%, de préférence plus de 95%, de préférence plus de 98%, de préférence plus de 99% de ce constituant, en pourcentage massique sur la base de la particule.

Dans un souci de clarté, on utilise les formules chimiques des oxydes pour désigner les teneurs de ces oxydes dans une composition. Par exemple, « ZrO₂ », « SiO₂ » ou « Al₂O₃ » désignent les teneurs de ces oxydes et « zircone », « silice » et « alumine » sont utilisés pour désigner des phases cristallisées de ces oxydes constituées de ZrO₂, SiO₂ et Al₂O₃, respectivement. Les éléments Zr, Si et AI peuvent cependant être également présents sous d'autres phases, en particulier sous forme de zircon, c'est-à-dire de phase ZrSiO₄.

Sauf mention contraire, toutes les teneurs en oxydes dans un bloc selon l'invention sont des pourcentages massiques sur la base des oxydes. Une teneur massique d'un oxyde d'un élément métallique se rapporte à la teneur totale de cet élément exprimée sous la forme de l'oxyde le plus stable, selon la convention habituelle de l'industrie.

HfO₂ n'est pas chimiquement dissociable de ZrO₂. Cependant, selon la présente invention, HfO₂ n'est pas ajouté volontairement dans la charge. HfO₂ ne désigne donc que les traces d'oxyde d'hafnium, cet oxyde étant toujours naturellement présent dans les sources d'oxyde de zirconium à des teneurs généralement inférieures à 5%, généralement inférieures à 2%. Dans un bloc selon l'invention, la teneur massique en HfO₂ est de préférence inférieure à 5%, de préférence inférieure à 3%, de préférence inférieure à 2%. Par souci de clarté, on peut désigner indifféremment la teneur totale en oxyde de zirconium et en traces d'oxyde d'hafnium par « ZrO₂ » ou par « ZrO₂ + HfO₂ ». HfO₂ n'est donc pas compris dans les " espèces oxydes autres que ZrO₂, SiO₂, Al₂O₃, et Na₂O ".

Par « impuretés », on entend les constituants inévitables, introduits avec les matières premières ou résultant de réactions avec ces constituants. Les impuretés ne sont pas des constituants nécessaires, mais seulement tolérés. Par exemple, les composés faisant partie du groupe des oxydes, nitrures, oxynitrures, carbures, oxycarbures, carbonitrures et espèces métalliques de fer, titane, vanadium et chrome sont des impuretés.

### Brève description des figures

D'autres caractéristiques et avantages de l'invention apparaîtront encore à la lecture de la description détaillée qui va suivre et à l'examen du dessin annexé dans lequel :
- la figure 1 est une photographie de la microstructure du bloc de l'exemple 2 ;
- la figure 2 est une photographie du bloc de l'exemple 2.

### Description détaillée de l'invention

### Procédé

La composition du bloc fabriqué suivant un procédé selon l'invention dépend de la charge qui est fondue, mais également des conditions dans lesquelles les conditions réductrices et oxydantes, aux étapes a) et b) respectivement, sont appliquées. La maîtrise de ces différents paramètres, en fonction de la composition du bloc souhaité, est parfaitement connue de l'homme de l'art.

De préférence, les paramètres du procédé sont adaptés de manière que le bloc obtenu à l'étape d) présente une composition chimique telle que :
- ZrO₂ : plus de 82,0%, de préférence plus de 84,0%, de préférence plus de 86,0%, et/ou moins de 97,0%, voire moins de 95,0%, voire moins de 94,0%, ZrO₂ constituant le complément à 100%, et/ou
- SiO₂: plus de 0,5%, de préférence plus de 1,5%, de préférence plus de 2,5%, de préférence plus de 4,0%, voire plus de 6,0%, plus de 8,0%, plus de 8,5%, et/ou moins de 15,0%, voire moins de 12,0%, moins de 10,0%, voire moins de 8,0%, et/ou
- Al₂O₃: plus de 0,2%, de préférence plus de 1,0%, et/ou moins de 3,0%, de préférence moins de 2,0%, et/ou
- Na₂O : plus de 0,1%, voire plus de 0,2%, et/ou moins de 0,6%, de préférence moins de 0,5%, voire moins de 0,4%, et/ou
- B₂O₃: plus de 0,1%, voire plus de 0,2%, et/ou moins de 0,6%, de préférence moins de 0,5%, voire moins de 0,4%, et/ou
- espèces oxydes autres que ZrO₂, SiO₂, Al₂O₃, Na₂O et B₂O₃: moins de 10,0%, de préférence moins de 9,0%, de préférence encore moins de 8,0%, moins de 5,0%, voire moins de 3,0%, ou moins de 2,0%, ou moins de 1,0%, ou moins de 0,5%.

La charge comporte plus de 50% en masse de zircon.

Le zircon peut apporter tout ou partie de l'oxyde de zirconium ZrO₂. Si nécessaire, des particules de zircone, éventuellement stabilisée, peuvent être ajoutées à la charge.

De préférence, la charge est également adaptée, de manière bien connue, en fonction de la stabilisation de la zircone souhaitée dans le bloc obtenu à l'étape d). En particulier, la charge peut comporter plus de 0,5%, plus de 1,5%, plus de 3,0%, plus de 4,0%, plus de 5,0%, voire plus de 6,0%, et/ou moins de 10,0%, moins de 9,0%, voire moins de 8,0% de stabilisant de la zircone, en particulier CaO et/ou Y₂O₃ et/ou MgO et/ou CeO₂, de préférence de CaO et/ou de Y₂O₃. En particulier, la charge peut comporter plus de 0,5%, plus de 1,5%, plus de 2,0% et/ou moins de 5,0%, moins de 4,0%, voire moins de 3,0% de Y₂O₃.

Selon un mode de réalisation, la charge est adaptée pour que plus de 80 %, de préférence plus de 90 %, voire plus de 99% ou sensiblement 100% de la zircone du bloc soit monoclinique à température ambiante, en pourcentages massiques.

Selon un autre mode de réalisation permettant d'améliorer le comportement du bloc vis-à-vis de la fermeture des joints, du bullage et des variations thermiques, la charge est adaptée pour que moins de 75 %, de préférence moins de 70 % de la zircone du bloc soit monoclinique. De préférence, la charge est adaptée pour que plus de 25%, de préférence plus de 30 %, de la zircone du bloc soit stabilisée, de préférence sous forme quadratique, à température ambiante, en pourcentages massiques.

De préférence, la charge est adaptée de manière que l'ensemble des oxydes Al₂O₃, B₂O₃, Na₂O, K₂O, Y₂O₃, BaO, SrO, MgO, CaO, CeO₂, Fe₂O₃, TiO₂, Ta₂O₅ et Nb₂O₅ représente moins de 10,0%, de préférence moins de 9,0%, de préférence encore moins de 8,0%, voire moins de 5,0%, voire moins de 3,0% de la masse du bloc obtenu à l'étape d).

De préférence, la charge est adaptée de manière que chacun des oxydes Al₂O₃, B₂O₃, Y₂O₃, et CaO représente moins de 3,0%, de préférence moins de 2,0%, de préférence encore moins de 1,5% de la masse du bloc obtenu à l'étape d).

De préférence, la charge est adaptée de manière que chacun des oxydes Na₂O, K₂O, BaO, SrO, MgO, CeO₂, Fe₂O₃, TiO₂, Ta₂O₅ et Nb₂O₅ représente moins de 1,0%, de préférence moins de 0,9%, de préférence encore moins de 0,8%, voire moins de 0,6%, voire moins de 0,5% de la masse du bloc obtenu à l'étape d).

De préférence, les espèces oxydes autres que ZrO₂, SiO₂, Al₂O₃, Na₂O, B₂O₃, Y₂O₃, CaO, MgO et CeO₂ sont des impuretés.

De préférence, la charge est constituée d'un mélange de poudres.

De préférence, la charge présente une composition, en pourcentage massique, telle que :
- particules de zircon : plus de 60%, de préférence plus de 70%, de préférence plus de 80%, de préférence plus de 85%, et/ou
- particules d'un agent réducteur, de préférence de carbone : plus de 2,0%, de préférence plus de 3,0%, de préférence plus de 4,0%, voire plus de 5,0%, et/ou moins de 10,0%, de préférence moins de 8,0%, et/ou
- particules d'alumine: plus de 0,2%, de préférence plus de 0,5%, voire plus de 0,8%, et/ou de préférence moins de 3,0%, de préférence moins de 2,5%, de préférence moins de 2,0%, voire moins de 1,5%, voire moins de 1,0%, et/ou
- particules d'une source de sodium, de préférence de carbonate de sodium : plus de 0,5%, de préférence plus de 1,0%, de préférence plus de 1,5%, de préférence plus de 2,0%, voire plus de 3,0%, voire plus de 3,5%, et/ou de préférence moins de 5,0%, de préférence moins de 4,5%, voire moins de 4,0%, et/ou
- particules d'oxyde de bore: plus de 0,5%, voire plus de 1,0%, voire plus de 1,5%, voire plus de 2,0% et/ou de préférence moins de 5,0%, de préférence moins de 4,0%, voire moins de 3,0%, et/ou
- autres particules, c'est-à-dire autres que les particules de zircon, d'agent réducteur, d'alumine, de source de sodium et d'oxyde de bore : moins de 10%, de préférence moins de 5%, voire moins de 3%, voire moins de 1%, voire moins de 0,5%, voire moins de 0,1%.

Les particules d'agent réducteur sont de préférence des particules de coke et/ou des particules de charbon de bois, et/ou des particules d'aluminium. De préférence, les particules d'agent réducteur sont des particules de coke, de préférence comportant, en pourcentage massique, plus de 95,0 % de carbone, voire plus de 96,5 % de carbone, voire plus de 98,0% de carbone, voire plus de 99,0% de carbone. De préférence, les particules d'agent réducteur sont des particules de coke de brai.

De préférence, la charge comporte des particules d'alumine d'une part et des particules d'une source de sodium et/ou des particules d'une source de bore d'autre part. Avantageusement, il en résulte la formation d'une phase silicatée conférant une bonne résistance aux sollicitations thermomécaniques.

Dans un mode de réalisation, des particules d'alumine et des particules d'une source de sodium sont ajoutées dans le bain de matière en fusion, à l'étape b).

Le zircon et/ou l'agent réducteur et/ou l'alumine et/ou la source de sodium et/ou la source de bore peuvent être apportés sous d'autres formes que la forme particulaire, dans les mêmes quantités. La forme particulaire est cependant préférée.

**A l'étape a),** la fusion est réalisée dans des conditions réductrices, de manière à dissocier, au moins partiellement, de préférence sensiblement complètement le zircon, sous la forme de zircone et de silice. La silice se volatilise progressivement. La quantité des autres oxydes présents dans la charge n'est sensiblement pas affectée par les conditions réductrices.

Les conditions réductrices sont donc maintenues jusqu'à atteindre la teneur en silice souhaitée dans le bloc. Le passage aux conditions oxydantes, à l'étape b), permet alors de stabiliser le teneur en silice.

Toutes les techniques permettant d'obtenir des conditions réductrices, bien connues de l'homme du métier, sont possibles.

En particulier, la fusion est de préférence réalisée grâce à une marche en résistor, les électrodes plongeant dans la charge, ou grâce à l'action combinée d'un arc électrique court et de préférence sans brassage. La tension et l'intensité nécessaires pour l'obtention d'un arc court dépendent de nombreux paramètres, bien maîtrisés par l'homme du métier, tels que la taille du four, le nombre et la taille des électrodes.

De préférence, la fusion s'opère à une température supérieure à 2000°C, de préférence pendant une durée inférieure à 2 heures, voire inférieure à 1 heure 30 minutes, voire inférieure à 1 heure et, de préférence, supérieure à 30 minutes, voire supérieure à 45 minutes.

De préférence, les conditions réductrices sont maintenues au moins jusqu'à ce que plus de 80%, plus de 90%, de préférence sensiblement 100% de la charge, en pourcentage massique, soit transformée en matière en fusion.

**A l'étape b),** le bain de matière en fusion obtenu à l'issue de l'étape a) est maintenu en fusion et soumis à des conditions oxydantes.

Toutes les techniques permettant d'obtenir des conditions oxydantes sont envisagées.

Les conditions oxydantes sont de préférence obtenues grâce à l'action combinée d'un arc électrique assez long, ne produisant pas de réduction, et d'un brassage favorisant la réoxydation. Préférentiellement, on utilise le procédé de fusion à l'arc long décrit dans le brevet FR1208577 et ses additions n°75893 et 82310. Ce procédé consiste à utiliser un four à arc électrique dont l'arc jaillit entre la bain de matière en fusion et au moins une électrode écartée de ce bain, et à régler la longueur de l'arc pour que son action réductrice soit réduite à une valeur minimale, tout en maintenant une atmosphère oxydante au-dessus du bain en fusion et en brassant ledit bain, soit par l'action de l'arc lui-même, soit en faisant barboter un gaz oxydant (air ou oxygène, par exemple) dans le bain, ou encore en ajoutant au bain des substances dégageant de l'oxygène telles que des peroxydes ou des nitrates.

L'application des conditions oxydantes agit principalement sur le taux de carbone résiduel. De préférence, les conditions oxydantes sont maintenues jusqu'à ce que la teneur en carbone dans le bain de matière en fusion soit inférieure à 250 ppm, voire inférieure à 200 ppm, voire inférieure à 100 ppm.

De préférence, la durée de l'étape b) est inférieure à 1 heure, voire inférieure à 45 minutes, voire inférieure à 30 minutes et supérieure à 5 minutes, voire à 10 minutes, voire à 20 minutes.

L'étape b) permet d'utiliser majoritairement du zircon comme matière première, tout en limitant le taux de carbone résiduel et la porosité dans les blocs obtenus. Le coût de fabrication des blocs en est réduit.

**A l'étape c),** la matière en fusion est classiquement versée dans un moule.

De préférence, le moule présente des dimensions permettant de fabriquer un bloc dont toutes les dimensions sont supérieures à 100 mm et/ou un bloc de plus de 10 kg.

**A l'étape d),** le refroidissement est de préférence effectué à une vitesse inférieure à 100°C/h, de préférence inférieure à 50°C/h, de préférence inférieure à 20°C/h, une vitesse d'environ 10°C par heure étant bien adaptée.

**A l'étape e),** le bloc issu de l'étape d) peut subir une recuisson. En particulier, lorsque la matière en fusion versée dans le moule est au moins en partie solidifiée de manière à obtenir une masse rigide, cette masse est extraite du moule et disposée dans un environnement facilitant le contrôle de son refroidissement.

Le procédé peut encore comporter une étape additionnelle d'usinage permettant de donner au bloc les dimensions désirées.

### Bloc

Le bloc obtenu à l'étape d) comporte plus de 80%, de préférence plus de 85% de zircone.

La très haute teneur en zircone permet de répondre aux exigences de résistance à la corrosion élevée, sans génération de défauts nuisibles à la qualité du verre fabriqué.

De préférence, plus de 90%, plus de 95%, de préférence sensiblement 100% du zirconium du bloc est sous forme de zircone, en pourcentage massique.

La présence de silice est avantageuse, la formation d'une phase vitreuse intergranulaire permettant d'accommoder de manière efficace les variations de volume de la zircone lors de sa transformation allotropique réversible. Une trop forte teneur en silice peut cependant générer des défauts dans le verre par lâcher de pierres (morceaux de bloc réfractaire résultant d'une perte de cohésion du bloc) et dégrader la résistance à la corrosion.

Le taux de carbone résiduel, en pourcentage massique sur la base du bloc, est de préférence inférieur à 500 ppm, de préférence inférieur à 250 ppm, de préférence inférieur à 200 ppm, voire inférieur à 100 ppm.

De préférence, la porosité totale du bloc est inférieure à 15%, voire inférieure à 10%, voire inférieure à 5%.

Selon un mode de réalisation concernant particulièrement les blocs pour les superstructures ou la cuve, la porosité totale du bloc est inférieure à 5%, voire inférieure à 2%, voire inférieure à 1%.

### Exemples

Les exemples non limitatifs suivants sont donnés dans le but d'illustrer l'invention.

Dans ces exemples, on a employé les matières premières suivantes ;
- du sable de zircon à 33 % de silice,
- de l'alumine de type AC44 vendue par la société Pechiney et contenant en moyenne 99,4 % d'alumine,
- du carbonate de sodium, source de Na₂O,
- du coke de brai, comportant environ 98% de carbone.

A l'étape a), la charge est introduite dans une cuve d'environ 1 m de diamètre d'un four à arc électrique monophasé de type Héroult pourvu de deux électrodes en graphite de diamètre 130 mm. Pour les exemples 1 à 5, toutes les matières premières sont mélangées dans les proportions données dans le tableau 1, et disposées dans la cuve avant le début de la fusion. L'exemple 6 diffère des exemples 1 à 5 en ce que l'alumine et le carbonate de sodium sont introduits, au début de l'étape b), dans le bain de matière en fusion obtenu à partir des autres matières premières.

La charge est ensuite fondue en conditions réductrices grâce à une marche en résister, avec une tension d'environ 130 V, une intensité de 2300 A et une énergie électrique spécifique fournie supérieure à 2 kWh/kg chargé.

A l'étape b), le bain de matière en fusion est maintenu pendant 15 à 40 minutes dans des conditions oxydantes en utilisant un arc long, comme décrit dans le brevet FR1208577, avec une tension d'environ 210 V, et, pour les exemples 2 et 4, en injectant respectivement 240 ou 120 litres d'oxygène.

La matière en fusion est ensuite coulée dans un moule pour obtenir des blocs de format 180 × 180 × 350 mm³.

**Tableau 1 (pourcentages massiques sur la base de la charge)**

| Exemple | 1 | 2 | 3 | 4 | 5 | 6 |
|---|---|---|---|---|---|---|
| Zircon (z) | 89,2% | 88,0% | 88,6% | 88,6% | 83,1% | 88,0% |
| Coke de Brai (c) | 6,7% | 6,6% | 6,7% | 6,7% | 6,3% | 6,6% |
| Alumine (a) | 0,7% | 0,7% | 0,7% | 0,7% | 0,7% | 0,7% |
| Carbonate de sodium (s) | 3,4% | 4,7% | 4,0% | 4,0% | 3,8% | 4,7% |
| Chaux | / | / | / | / | 4,7% | / |
| Oxyde d'yttrium | / | / | / | / | 1,4% | / |
| Etape d'introduction de (a) et (s) | a) | a) | a) | a) | a) | b) |
| Injection d'oxygène | non | oui | non | oui | non | non |

L'analyse chimique des blocs obtenus est donnée dans le tableau 2 ; il s'agit d'une analyse chimique moyenne, effectuée par spectroscopie de fluorescence X et donnée en pourcentages massiques.

Les phases cristallisées ont été identifiées par diffraction des rayons X et sont données dans le tableau 2 ; « Z-m » signifie zircone monoclinique et « Z-q » zircone quadratique.

**Tableau 2**

| Exemple | 1 | 2 | 3 | 4 | 5 | 6 |
|---|---|---|---|---|---|---|
| ZrO₂ | 88,5% | 88,4% | 89,0% | 86,4% | 84,7% | 90,8% |
| SiO₂ | 8,7% | 9,1% | 8,9% | 11,1% | 10,3% | 7,1% |
| Al₂O₃ | 1,6% | 1,9% | 1,5% | 1,7% | 1,7% | 1,5% |
| Na₂O | 0,3% | 0,3% | 0,3% | 0,4% | 0,4% | 0,2% |
| CaO | / | / | / | / | 1,9% | / |
| Y₂O₃ | / | / | / | / | 0,7% | / |
| oxydes autres que ceux qui précèdent | 0,9% | 0,3% | 0,3% | 0,4% | 0,3% | 0,4% |
| C résiduel (ppm) | < 200 | 40 | < 200 | < 200 | < 200 | < 200 |
| Phase(s) | Z-m | Z-m | Z-m | Z-m | Z-m, Z-q | Z-m |

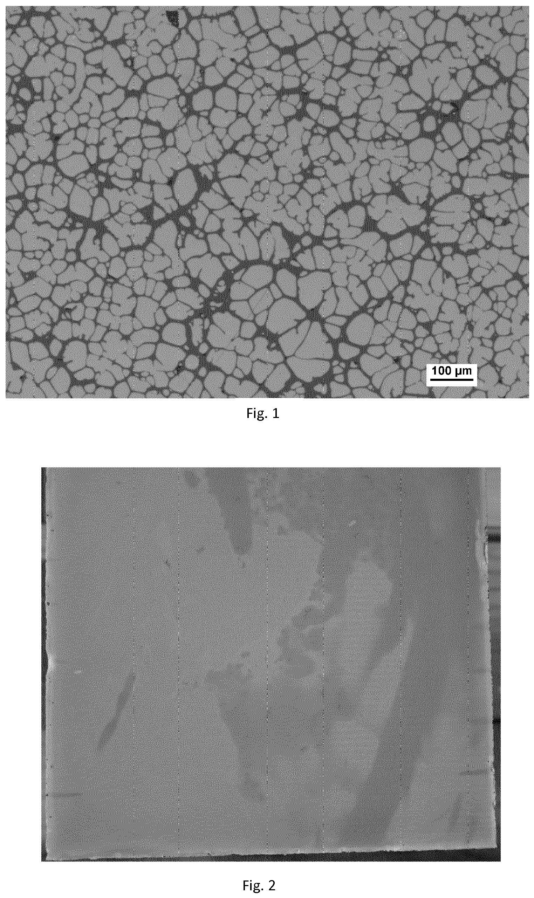

Les blocs obtenus présentent une densité comprise entre 5,1 et 5,4 et une structure sous forme de dendrite de zircone dans une phase silicatée (figure 1 correspondant à l'exemple 2).

Ces exemples ont permis de constater qu'il est possible, en utilisant du zircon comme source principale de zircone, d'obtenir des blocs présentant une très haute teneur en zircone et sensiblement dépourvus de fissures, comme représenté sur la figure 2.

Ces blocs sont avantageusement parfaitement adaptés à une utilisation en conditions industrielles.

Par ailleurs, d'autres essais ont permis de vérifier que les propriétés reconnues pour les matériaux à très haute teneur en zircone, en particulier la résistance à la corrosion par les vapeurs de four de verrerie, ne sont pas substantiellement dégradées par la mise en oeuvre du procédé selon l'invention.

Un échantillon d'un bloc obtenu avec un procédé selon l'invention (exemple 2) a été comparé à un échantillon de produit ER 1195. Les échantillons, sous la forme de barreaux d'une longueur de 100 mm et d'un diamètre de 24 mm, sont soumis à deux cycles de 4 heures à 1500°C, les montée et descente en température étant de 100°C/h. On mesure la variation de volume (en %) de l'échantillon suite à ces deux cycles, ce qui correspond à la valeur d'exsudation exprimée en %. On a obtenu une valeur inférieure à 3 %, conforme à celle du produit de référence.

Bien entendu, la présente invention n'est pas limitée aux modes de réalisation décrits et représentés fournis à titre d'exemples illustratifs et non limitatifs.

## Revendications

1. Procédé de fabrication d'un bloc réfractaire comportant plus de 80% de zircone, en pourcentage massique sur la base des oxydes, ledit procédé comprenant les étapes successives suivantes :
a) fusion, en conditions réductrices, d'une charge comportant plus de 50% de zircon, en pourcentage massique, de manière à réduire le zircon et obtenir une matière en fusion,
b) application de conditions oxydantes à la matière en fusion,
c) coulage de ladite matière en fusion,
d) refroidissement jusqu'à solidification au moins partielle de la matière en fusion sous la forme d'un bloc,
e) optionnellement, traitement thermique dudit bloc.

2. Procédé selon la revendication précédente, dans lequel l'étape a) est poursuivie jusqu'à ce que la teneur en silice dans la matière en fusion soit inférieure à 15% et l'étape b) est poursuivie jusqu'à ce que la teneur en carbone dans la matière en fusion soit inférieure à 500 ppm.

3. Procédé selon l'une quelconque des revendications précédentes, dans lequel la charge comporte plus de 80% de zircon, en pourcentage massique sur la base de la charge.

4. Procédé selon l'une quelconque des revendications précédentes, dans lequel la charge présente une composition, en pourcentage massique sur la base de la charge, telle que la quantité d'agent réducteur, de préférence de carbone, est supérieure à 2,0% et inférieure à 10,0%.

5. Procédé selon la revendication immédiatement précédente, dans lequel la quantité d'agent réducteur est supérieure à 4,0% et inférieure à 8,0%.

6. Procédé selon l'une quelconque des revendications précédentes, dans lequel la charge comporte une quantité d'alumine supérieure à 0,2% et inférieure à 3,0%, en pourcentage massique sur la base de la charge.

7. Procédé selon la revendication immédiatement précédente, dans lequel la quantité d'alumine est supérieure à 0,5% et inférieure à 2,5%.

8. Procédé selon l'une quelconque des deux revendications immédiatement précédentes, dans lequel la quantité d'alumine est inférieure à 1,5%.

9. Procédé selon l'une quelconque des revendications précédentes, dans lequel la charge comporte une quantité d'une source de sodium, de préférence de carbonate de sodium, supérieure à 0,5% et inférieure à 5,0%, en pourcentage massique sur la base de la charge.

10. Procédé selon la revendication immédiatement précédente, dans lequel la quantité de source de sodium est supérieure à 1,0% et inférieure à 4,5%.

11. Procédé selon l'une quelconque des revendications précédentes, dans lequel la charge comporte une quantité totale de stabilisant de la zircone supérieure à 1,0% et inférieure à 10,0%.

12. Procédé selon la revendication immédiatement précédente, dans lequel la charge comporte une quantité totale de stabilisant de la zircone supérieure à 4,0%.

13. Procédé selon l'une quelconque des revendications précédentes, dans lequel la charge est adaptée de manière que le bloc obtenu à l'étape d) présente une composition chimique telle que, pour un total de 100% :
- ZrO₂ : plus de 82,0% et moins de 97,0%,
- SiO₂ : plus de 0,5% et moins de 15,0%,
- Al₂O₃: plus de 0,2%,
- Na₂O : plus de 0,1%,
- espèces oxydes autres que ZrO₂, SiO₂, Al₂O₃, et Na₂O : moins de 10,0%.

14. Procédé selon la revendication immédiatement précédente, dans lequel la charge est adaptée de manière que le bloc obtenu à l'étape d) présente une composition chimique telle que, pour un total de 100% :
- ZrO₂ : plus de 86,0%,
- SiO₂ : plus de 2,5%,
- Al₂O₃: 1,0 - 3,0%,
- Na₂O : moins de 0,5%,
- espèces oxydes autres que ZrO₂, SiO₂, Al₂O₃, et Na₂O : moins de 5,0%.

15. Procédé selon l'une quelconque des revendications précédentes, configuré de manière que , à température ambiante et en pourcentages massiques, plus de 80 % de la zircone dudit bloc soit monoclinique ou que plus de 25% de la zircone soit quadratique.

16. Procédé selon l'une quelconque des revendications précédentes, configuré de manière que ledit bloc présente une masse de plus de 10 kg.

## Patentansprüche

1. Verfahren zur Herstellung eines feuerfesten Blocks, der mehr als 80 % Zirconiumdioxid, in Massenprozent auf Oxidbasis, umfasst, wobei das Verfahren die folgenden aufeinanderfolgenden Schritte umfasst:
a) Schmelzen einer Charge, die mehr als 50 % Zirkon, in Massenprozent, umfasst, unter reduzierenden Bedingungen zur Reduktion des Zirkons und zum Erhalt eines schmelzflüssigen Materials,
b) Anwenden von oxidierenden Bedingungen auf das schmelzflüssige Material,
c) Gießen des schmelzflüssigen Materials,
d) Abkühlen des schmelzflüssigen Materials bis zur zumindest teilweisen Verfestigung in Form eines Blocks,
e) gegebenenfalls Wärmebehandeln des Blocks.

2. Verfahren nach dem vorhergehenden Anspruch, wobei der Schritt a) fortgesetzt wird, bis der Siliciumdioxidgehalt in dem schmelzflüssigen Material weniger als 15 % beträgt, und Schritt b) fortgesetzt wird, bis der Kohlenstoffgehalt in dem schmelzflüssigen Material weniger als 500 ppm beträgt.

3. Verfahren nach einem der vorhergehenden Ansprüche, wobei die Charge mehr als 80 % Zirkon, in Massenprozent auf der Basis der Charge, umfasst.

4. Verfahren nach einem der vorhergehenden Ansprüche, wobei die Charge eine derartige Zusammensetzung, in Massenprozent auf der Basis der Charge, aufweist, dass die Menge an Reduktionsmittel, vorzugsweise Kohlenstoff, mehr als 2,0 % und weniger als 10,0 % beträgt.

5. Verfahren nach dem unmittelbar vorhergehenden Anspruch, wobei die Menge an Reduktionsmittel mehr als 4,0 % und weniger als 8,0 % beträgt.

6. Verfahren nach einem der vorhergehenden Ansprüche, wobei der Füllstoff eine Menge an Aluminiumoxid von mehr als 0,2 % und weniger als 3,0 %, in Massenprozent auf der Basis der Charge, aufweist.

7. Verfahren nach dem unmittelbar vorhergehenden Anspruch, wobei die Menge an Aluminiumoxid mehr als 0,5 % und weniger als 2,5 % beträgt.

8. Verfahren nach einem der zwei unmittelbar vorhergehenden Ansprüche, wobei die Menge an Aluminiumoxid weniger als 1,5 % beträgt.

9. Verfahren nach einem der vorhergehenden Ansprüche, wobei die Charge eine Menge einer Natriumquelle, vorzugsweise Natriumcarbonat, von mehr als 0,5 % und weniger als 5,0 %, in Massenprozent auf der Basis der Charge, umfasst.

10. Verfahren nach dem unmittelbar vorhergehenden Anspruch, wobei die Menge an Natriumquelle mehr als 1,0 % und weniger als 4,5 % beträgt.

11. Verfahren nach einem der vorhergehenden Ansprüche, wobei die Charge eine Gesamtmenge an Stabilisator des Zirconiumdioxids von mehr als 1,0 % und weniger als 10,0 % umfasst.

12. Verfahren nach dem unmittelbar vorhergehenden Anspruch, wobei die Charge eine Gesamtmenge an Stabilisator des Zirconiumdioxids von mehr als 4,0 % umfasst.

13. Verfahren nach einem der vorhergehenden Ansprüche, wobei die Charge so eingestellt wird, dass der in Schritt d) erhaltene Block eine solche chemische Zusammensetzung aufweist, dass für insgesamt 100 %:
- ZrO₂: mehr als 82,0 % und weniger als 97,0 %,
- SiO₂: mehr als 0,5 % und weniger als 15,0 %,
- Al₂O₃: mehr als 0,2 %,
- Na₂O: mehr als 0,1 %,
- andere Oxidspezies als ZrO₂, SiO₂, Al₂O₃ und Na₂O: weniger als 10,0 %.

14. Verfahren nach dem unmittelbar vorhergehenden Anspruch, wobei die Charge so eingestellt wird, dass der in Schritt d) erhaltene Block eine solche chemische Zusammensetzung aufweist, dass für insgesamt 100 %:
- ZrO₂: mehr als 86,0 %,
- SiO₂: mehr als 2,5 %,
- Al₂O₃: 1,0-3,0 %,
- Na₂O: weniger als 0,5 %,
- andere Oxidspezies als ZrO₂, SiO₂, Al₂O₃ und Na₂O: weniger als 5,0 %.

15. Verfahren nach einem der vorhergehenden Ansprüche, das so ausgestaltet ist, dass bei Umgebungstemperatur und in Massenprozent mehr als 80 % des Zirconiumdioxids des Blocks monoklin sind oder dass mehr als 25 % des Zirconiumdioxids tetragonal sind.

16. Verfahren nach einem der vorhergehenden Ansprüche, das so ausgestaltet ist, dass der Block eine Masse von mehr als 10 kg aufweist.

## Claims

1. Process for the manufacture of a refractory block comprising more than 80% zirconia, in percentage by weight based on the oxides, said process comprising the following successive stages:
a) melting, under reducing conditions, of a charge comprising more than 50% zircon, in percentage by weight, such as to reduce the zircon and obtain a molten material,
b) application of oxidizing conditions to the molten material,
c) casting of said molten material,
d) cooling until at least partial solidification of the molten material in the form of a block,
e) optionally, heat treatment of said block.

2. Process according to the preceding claim, wherein stage a) is continued until the silica content in the molten material is less than 15% and stage b) is continued until the carbon content in the molten material is less than 500 ppm.

3. Process according to either one of the preceding claims, wherein the charge comprises more than 80% zircon, in percentage by weight based on the charge.

4. Process according to any one of the preceding claims, wherein the charge presents a composition, in percentage by weight based on the charge, such that the quantity of reducing agent, preferably of carbon, is greater than 2.0% and less than 10.0%.

5. Process according to the immediately preceding claim, wherein the quantity of reducing agent is greater than 4.0% and less than 8.0%.

6. Process according to any one of the preceding claims, wherein the charge comprises a quantity of alumina greater than 0.2% and less than 3.0%, in percentage by weight based on the charge.

7. Process according to the immediately preceding claim, wherein the quantity of alumina is greater than 0.5% and less than 2.5%.

8. Process according to either one of the two immediately preceding claims, wherein the quantity of alumina is less than 1.5%.

9. Process according to any one of the preceding claims, wherein the charge comprises a quantity of a source of sodium, preferably of sodium carbonate, greater than 0.5% and less than 5.0%, in percentage by weight based on the charge.

10. Process according to the immediately preceding claim, wherein the quantity of source of sodium is greater than 1.0% and less than 4.5%.

11. Process according to any one of the preceding claims, wherein the charge comprises a total quantity of stabilizer of the zirconia greater than 1.0% and less than 10.0%.

12. Process according to the immediately preceding claim, wherein the charge comprises a total quantity of stabilizer of the zirconia greater than 4.0%.

13. Process according to any one of the preceding claims, wherein the charge is modified such that the block obtained in stage d) presents a chemical composition such that, for a total of 100%:
- ZrO₂: more than 82.0% and less than 97.0%,
- SiO₂: more than 0.5% and less than 15.0%,
- Al₂O₃: more than 0.2%,
- Na₂O: more than 0.1%,
- oxide species other than ZrO₂, SiO₂, Al₂O₃ and Na₂O: less than 10.0%.

14. Process according to the immediately preceding claim, wherein the charge is modified such that the block obtained in stage d) presents a chemical composition such that, for a total of 100%:
- ZrO₂: more than 86.0%,
- SiO₂: more than 2.5%,
- Al₂O₃: 1.0 - 3.0%,
- Na₂O: less than 0.5%,
- oxide species other than ZrO₂, SiO₂, Al₂O₃ and Na₂O: less than 5.0%.

15. Process according to any one of the preceding claims, configured such that, at ambient temperature and in percentages by weight, more than 80% of the zirconia of said block is monoclinic or that more than 25% of the zirconia is tetragonal.

16. Process according to any one of the preceding claims, configured such that said block presents a weight of more than 10 kg.
